# EUROPÄISCHE PATENTSCHRIFT

(11) **EP 0 899 250 B1**
(45) Veröffentlichungstag und Bekanntmachung des Hinweises auf die Patenterteilung: **04.08.2004**
(21) Anmeldenummer: 98113341.6
(22) Anmeldetag: 17.07.1998
(51) Int. Cl.: C04B 35/532, F27B 13/14, F27D 19/00

(54) **Verfahren zur Prozessführung eines Anodenbrennofens**
Méthode pour executer un procédé dans un four pour la cuisson d' anodes
Method for running a process in an anode firing furnace

(30) Priorität: 25.08.1997 DE 19736950; 19.06.1998 DE 19827361
(43) Veröffentlichungstag der Anmeldung: 03.03.1999
(73) Patentinhaber: Innovatherm Prof. Dr. Leisenberg GmbH & Co. KG, 35510 Butzbach (DE)
(72) Erfinder: Leisenberg, Wolfgang, Dr.-Ing. Professor, 671231 Bad Nauheim (DE)
(74) Vertreter: Engelhardt, Guido, Dipl.-Ing.

(56) Entgegenhaltungen:
- WO-A-91/19147
- DD-A- 280 377
- US-A- 4 859 175

## Beschreibung

Die Erfindung bezieht sich auf ein Verfahren zur Prozeßführung eines Anodenbrenn-Ofens, aus dem ein einstellbarer Rauchgasstrom in mindestens eine Brennkammer geführt wird.

Bei derartigen Anodenbrennöfen wird der Gastrom in einem Feuerschacht an unter Luftabschluß gelagerten Anoden vorbeigeführt und dabei durch die gebrannten Anoden aufgeheizt. Als vorgewärmte Verbrennungsluft wird der Gasstrom sodann durch die Feuerzone geleitet und heizt als Rauchgas die kalten Anoden auf. Nach dem Ringofen-Prinzip wandert die Feuerzone um den aus ringförmig angeordneten Kammern bestehenden Ofen, wohingegen die Anoden stationär gelagert sind. Der Ofen kann dabei aus einzelnen Großkammern für die Anoden bestehen und einen einzigen Rauchgasstrom aufweisen oder aus einer Reihe nebeneinanderliegender Anoden- und Feuerschächte gebildet sein.

Solche Öfen werden verwendet, um große Mengen von Kohleanoden zu brennen, die in der Elektrolyse zur Herstellung von Aluminium mittels Reduktion von Tonerde verwendet werden.
Dabei bestehen die Kohleanoden aus Potrolkoks und Pech, die im Brennofen unter Sauerstoffabschluß einem Wärmebehandlungsprozeß unterzogen werden. Der Ablauf des Wärmebehandlungsprozeßes ist derart, daß zunächst die Anode gemäß eines definierten Temperatur-Zeit-Gradienten auf etwa 1000 °C erhitzt und anschließend nach dem Sinterprozeß abgekühlt wird.

Zur Durchführung des Wärmebehandlungsprozeßes werden offene oder gedeckte Ringöfen verwendet, die aus Anodenbrennkammern bestehen, in die die ungebrannten Anoden eingeladen und mit Anthrazit gegen Sauerstoffzutritt versiegelt werden.
Der Wärmebehandlungsprozeß für die Anoden muß definiert ablaufen, um die Qualität der gebrannten Anoden vorherbestimmen zu können. Zu diesem Zweck sind auf dem Ofen bewegliche Feuer" angeordnet, die aus mobilen Rauchgasabsaug-, Meß-, Brenner- und Kühlrampen bestehen.
Durch einen vorgegebenen zeitabhängigen Sollwertverlauf an den Brennrampen und den Rauchgasabsaugrampen wird in den zwischen den Feuerschächten angeordneten Anodenschächten ein vorgegebener Temperatur-Zeitverlauf erreicht. Während die dadurch erzeugte Hitze an unterschiedlichen Stellen über die Anoden geführt wird, herrscht in den zwischen den Anodenschächten angebrachten Feuerschächten ein vorgegebener Temperatur-Zeitverlauf.
Die Einstellung des Temperatur-Zeitverlaufes erfolgt während der Aufheizperiode mittels eines gesteuerten Rauchgasstromes, der aus der Feuerzone abgesaugt wird. Gleichzeitig kann in der Feuerzone mittels einer gesteuerter Brennstoffzufuhr der Temperatur-Zeitverlauf eingestellt werden. In der Kühlzone erfolgt die Regulierung des Temperatur-Zeitverlaufes durch Einblasen von Kaltluft.

Ausgehend von der herrschenden Temperatur an der Anode während des Brennprozeßes, wird die Qualität der Anode von der Temperatur-Zeit-Fläche im Sinterbereich bestimmt, die auch mit Brennindex bezeichnet wird.
Um nun einen definierten Brennindex zu erzielen, ist ein bestimmter Temperatur-Zeitverlauf in den Feuerschächten notwenig.
Ein derartiges Temperaturprogramm wird bei den eingesetzten Anlagen als Sollwert vorgegeben und die Anlagenregler fahren dieses Programm als Sollwert möglichst exakt nach.

Bei der Aufheizung der Anode entweicht das als Bindemittel eingesetzte Pech als brennbares Gas.
Eine Begrenzung der Konsistent für die Anoden ist dadurch bewerkstelligt, daß in der Aufheizphase mehrere in Strömungsrichtung des Rauchgases liegende Anodenschächte von der gleichen Rauchgasmenge durchströmt werden. Die Ausgasgeschwindigkeit hängt von der Temperatur an der Anode ab und erfolgt über ein größeres Temperaturintervall.
Dadurch sind mehrere in Reihe liegende Kammern an der Ausgasung beteiligt. Dies kann jedoch zu teilweise unkontrollierbaren Temperaturverläufen in den Feuerschächten führen, oder wenn die Temperatur unterhalb der Zündtemperatur liegt, ist mit der Emission von unverbrannten Kohlenwasserstoffen zu rechnen.

Darüber hinaus wird der Zustand der einzelnen Feuerschächte durch die thermische Belastung, also die ständige Aufheizung und Abkühlung im Laufe der Zeit immer schlechter. Dies führt zwangsläuig zu einem Anstieg des Strömungswiderstandes in den Feuerschächten, so daß der Anteil der einströmenden Falschluft größer wird. Dieser zusätzliche Luftanteil beeinflußt die zu erzielenden Anodentemperaturen ebenfalls, so daß der gewünschte Temperaturverlauf nicht erzielt wird.

Ferner werden die Brennerbrücken während des Umsetzens mehr oder weniger lange abgeschaltet, oder es kommt zu Situationen, in denen nicht genügend Sauerstoff im Feuerschacht vorhanden ist, so daß eine vollständige Verbrennung des Brennstoffes nicht stattfindet und somit die Solltemperaturen nicht erreicht werden.

All diese Störungen des Brennverlaufes führen dazu, daß eine Streuung des Brennindexes nicht vermieden werden kann, so daß die Qualität der einzelnen Anoden unterschiedlich ist.

Die Qualität der gebrannten Anode ist bei gleicher Zusammensetzung maßgeblich abhängig von der erzielten Brenn-Temperatur und der Brenn-Dauer. Diese Qualität ist umso besser, je höher die Temperatur ist und je länger diese gehalten wird. Bei einer hohen Brenn-Temperatur sowie -Dauer steigen jedoch die Brennkosten und die Lebensdauer der Feuerschächte sinkt auf grund der höheren thermischen Belastungen.

Zu berücksichtigen bei der Herstellung von Anoden ist darüber hinaus auch, daß der Elektrolyseprozeß zur Gewinnung von Aluminium davon abhängig ist, welche Anode während der Elektrolyse die kürzeste Lebensdauer aufweist, denn die kürzeste Lebensdauer einer Anode bestimmt die Standzeit der Elektrolysezellen. Es ist dem zu Folge bei der Herstellung der Anoden darauf zu achten, daß sämtliche Anoden, die in einer Elektrolyse verwendet werden sollen, eine möglichst gleiche Qualität aufweisen. Daher sind bei verschiedenen Brennprozeßen möglichst gleiche Brennindizes zu erzielen.

Aufgabe der Erfindung ist es, ein Verfahren zur Brenn-Prozeßführung zur Verfügung zu stellen, das einen optimalen Brennprozeß gewährleistet, und zwar dahingehend daß die gebrannten Anoden eine möglichst gleiche Konsistenz in der Qualität aufweisen, um somit bei gleicher Anodenqualität die Brennkosten sowie die Kosten für die Elektrolyse zu minimieren.

Über die dem Stand der Technik entsprechende Messungen der Rauchgastemperaturen und der Einstellung der Brenner- und der Rauchgasvolumina in Abhängigkeit von dem gewünschten Temperatur-Zeitverlauf hinaus wird diese Aufgabe mittels der folgenden Verfahrensschritte gelöst:
- Messen der Rauchgastemperatur in jeder Brennkammer als IST-Temperatur,
- Erfassen des Sauerstoffgehaltes oder der Kohlenwasserstoffe,
- Einstellen der Leistung der Brenner in Abhängigkeit von der Feuerschachttemperatur und/ oder dem verfügbaren Sauerstoffgehalt im Feuerschacht,
- Vergleichen der IST-Temperatur in der Brennkammer mit einer vorgegebenen Solltemperatur und/ oder
- Ermitteln des Sauerstoffangebotes im Feuerschacht durch direkte Messung oder durch ein empirisches Modell, in das die zugeführte Brennstoffmenge und die äquivalente Brennstoffmenge aus der Pech-Ausgasung sowie der Rauchgasstrom eingeht,
- Ermitteln eines Abweichungsindexes als Zeitintegral der Temperaturabweichung,
- fortlaufende Modifizierung des Sollwertverlaufes, um das Abweichungsintegral am Ende der Prozeßführung auf Null zurückzuführen und/ oder
- Ermitteln eines Brennindexes oder eines Abweichungsintegrals in jedem Anodenschacht und
- Regeln der IST-Temperatur, um das Abweichungsintegral am Ende der Prozeßführung auf Null zurückzuführen.

Weitere vorteilhafte Ausgestaltungen der Erfindung ergeben sich aus den Unteransprüchen.

Das erfindungsgemäße Verfahren gibt zwei Stufen an, mit denen die Konsistenz der Anoden und damit der Brennindex verbessert und der Energieverbrauch für den Brennprozeß gesenkt werden kann.

In der ersten Stufe des Verfahrens wird davon ausgegagngen, daß der Brennindex unmittelbar von dem Verlauf der Feuerschacht-Temperatur abhängig ist. Von Bedeutung ist dabei nicht ein spezifischer Temperaturverlauf, sondern vielmehr der äquivalente Temperaturverlauf, der nämlich den Wärmefluß zur Anode gewährleistet. Es kann in einer ersten Näherung davon ausgegangen werden, daß in einem begrenzten Temperaturintervall die Wärmeleitung in etwa konstant ist. Das bedeutet, daß eine Abweichung von der Sollkurve, also dem Solltemperaturverlauf, in Kauf genommen werden kann, wenn das Zeitintegral der Abweichung durch eine entsprechend lange und große gegenläufige Abweichung der Temperatur gegenüber dem Sollwert am Ende des Brennprozeßes auf Null zurückgeführt wird.

Auf diese Weise ist also ein Maß verfügbar, das einen Mangel oder ein Überangebot an Wärmefluß zur Anode innerhalb der Brennkammer angibt, so daß bewußt eine Abweichung der Solltemperatur zugelassen werden kann. Wird beispielsweise versucht, während der Aufheizphase einen vorgegebenen Temperaturverlauf einzuhalten, so muß bei der Verbrennung der Pechausgasung der Volumenstrom des Rauchgases zurückgenommen werden. Diese Brennsituation führt zu einem Mangel an Sauerstoff im Feuerschacht, so daß eine zu niedrige Brenntemperatur entsteht und unverbrannte Kohlenwasserstoffe freigesetzt werden.

Diese unerwünschte Situation wird erfindungsgemäß dadurch vermieden, daß bereits vor Beginn dieses Zustandes der Rauchgasstrom erhöht wird, so daß die Zündtemperatur erreicht wird und dadurch auch genügend Sauerstoff zur Verbrennung vorhanden ist.
Es hat sich auch als vorteilhaft gezeigt, die Übertemperatur während der Aufheizphase zu zulassen und nicht zu regulieren, so daß sich die Temperatur eigenständig auf einen entsprechenden Wert einstellt. Die Verbrennung erfolgt somit vollständig und schädliche Emissionen von unverbranntem Kohlenwasserstoff entsteht nicht.

Bei dieser Vorgehensweise ist der Abweichungsindex von der bekannten Solltemperatur zu messen und im Verlauf der weiteren Prozeßführung zu kompensieren, um eine gleichmäßige Konsistens für alle gebrannten Anoden zu gewährleisten.
Die Absenkung der Feuerschachttemperatur wird dadurch bewerkstelligt, daß im späteren Verlauf des Brennprozeßes geringere Rauchgasmengen und/ oder eine niedrigere Brennstoffzufuhr zugeführt werden.

Eine weitere Brennsituation ist dann gegegeben, wenn in einem Feuerschacht zu wenig Sauerstoff vorhanden ist, da die Brenner keine eigene Luftversorgung besitzen. Die zur Verbrennung notwendige Luft wird den Brennern vielmehr durch die vorgewärmte Luft aus der Kühlzone zugeführt, die in die Feuerzone gezogen wird.
Dies führt jedoch dazu, daß für diese Brennsituation mehr Brennstoff eingesetzt werden muß, um den Temperatur-Sollwert zu erreichen. Es ist aber auch möglich, daß dieser Sollwert nicht erreicht wird, obwohl der Brenner mit maximaler Leistung betrieben wird. Der Brennstoff verläßt wiederum unverbrannt den Feuerschacht, so daß schädliche Kohlenwasserstoffe freigesetzt werden.

Bei einem ausreichenden Sauerstoffangebot wird also in einem bestimmten Temperaturintervall eine bestimmte Menge an Brennstoff benötigt, um einen vorgegebenen Temperatur-Gradienten zu erreichen, so daß aus dem Vergleich dieser meßbaren Werte, insbesondere der erforderlichen Brennerleistung auf die Effizienz der Verbrennung Rückschlüsse gezogen werden können.

Unterschreitet nunmehr ein Brenner eine untere Grenze der Effizienz, so wird nach dem erfindungsgemäßen Verfahren die Brennstoffmenge so weit reduziert bis das vorhandene Sauerstoffangebot mit dieser Brennerleistung vollständig verbrannt wird, so daß die untere Effiziensschwelle des Verbrennungsprozeßes nicht unterschritten wird.
Auf das Erreichen des Temperatur-Sollwertes wird also bewußt verzichtet, da diese Brennsituation lediglich in der Aufheizphase auftritt und erfindungsgemäß im weiteren Verlauf des Brennprozeß korregierbar ist.

Die Messungen des Sauerstoffgehaltes und/ oder der Kohlenwasserstoffe als flüchtige Bestandtteile im Rauchgasstrom erfordern einen großen apparativen Aufwand, so daß für das erfindungsgemäße Verfahren diese Werte mittels einer Schätzung bestimmt werden, ohne daß hierfür zusätzliche Meßwertaufnehmer erforderlich sind.
Zu diesem Zweck werden die Brennerleistungen als Stellgröße im Leitsystem sowie die Stellung der Rauchgasschieber bestimmt. Zusätzlich dazu ist der Unterdruck im Brennkanal zu messen, so daß sich mittels dieser auf einfache Art und Weise zu erfaßenden Größen die Gesamtbrennstoffmenge als auch der Volumenstrom des Rauchgases mit der erforderlichen Genauigkeit abschätzen lassen. Die derart gewonnenen Größen sind miteinander in Verhältnis zu setzen, so daß mittels dieser normierten Werte Rückschlüsse auf die Brennstoffbeladung des Feuerschachtes als Maß des freien Sauerstoffgehaltes möglich sind.

Zur Abschätzung der flüchtigen Bestandteile im Rauchgasstrom ist es erforderlich, die brennbaren Bestandteile der Anode mit einzubeziehen, da diese Bestandteile in der Ausgaszone einen Temperaturanstieg verursachen, dessen Gradient ein Maß für die Brennstoffmenge darstellt. Die im Feuerschacht als Brennstoffmenge vorhandenen flüchtigen Bestandteile sind folglich aus Kohlenwasserstoffen, Schwelgasen und den brennbaren Bestandteilen der Anode gebildet.

Aufgrund dieser empirisch gewonnen Daten läßt sich eine Brennstoffmenge berechnen, die mit der tatsächlich an den Brennern zugegebenen Brennstoffmenge äquivalent ist.
Somit ist ohne zusätzlichen Meßgeräten eine im gesamten Feuerschacht vorhandene Brennnstoffmenge und damit der verfügbare Sauerstoff ermittelbar.

Die konventionelle Ofenführung weist einen Temperaturanstieg und anschließend ein Halten dieser Temperatur auf. Auf grund der thermischen Trägheit der Anodenschächte erreicht die Anodenschachtwand erst mit erheblicher zeitlicher Verzögerung die Feuerschachttemperatur.
Diese thermische Trägheit nützt die Erfindung dahingehend vorteilhaft aus, daß eine dynamische Optimierung des Temperaturverlaufes erzielbar ist, da die Temperatur der ersten Haltephase über die Solltemperatur angehoben wird, ohne daß die Anodenschachtwand überhitzt und somit zerstört wird.
Die Temperatur kann dann in der zweiten und folgenden Haltephasen allmählich abgesenkt oder im Bereich der Solltemperatur gehalten werden, so daß das Abweichungsintegral der Feuerschacht- oder der Anodentemperatur zwischen der Ist-Temperatur und der Solltemperatur im Verlauf der Prozeßführung auf Null zurückgeführt wird.

Mit dieser ersten Stufe des Verfahrens ist also gewährleistet, daß bei gleichbleibendem Wärmeübergang der Wärmefluß zur Anode am Ende jedes Brennprozeßes gleich ist, auch wenn es zwischenzeitlich für jeden Brennprozeß zu unterschiedlichen Abweichungen kommt.

Diese vorgenannten Verfahrensschritte verbessern zwar die Konsistenz der Anoden und somit auch deren Qualität, es ist jedoch noch nicht gewährleistet, daß an jeder Anode tatsächlich der richtige Brennindex erreicht wird.

Mit Hilfe der zweiten Stufe des erfindungsgemäßen Verfahrens wird die Temperatur an der Anode erfaßt, denn durch den Verschleiß des feuerfesten Materials im Verlauf des Brennprozeßes ändert sich der Wärmeübergang.

Um den Verschleiß von Anoden-Thermoelementen möglichst gering zu halten, kann die zweite Stufe des Verfahrens dahingehend ergänzt werden, daß ein dynamisches adaptives Modell des thermischen Verhaltens erstellt wird.
Zu diesem Zweck wird von einer Grundstruktur ausgegangen, die aus der Identifikation des Brennprozeßes gewonnen wird, und zwar mittels der Messung der Temperaturen in den beiden Feuerschächten, zwischen denen der Anodenschacht angeordnet ist, sowie der Messung der Anodentemperatur.
Eine automatische Adaption der Parameter erfolgt dadurch, daß alle Anodenschächte bis zu einer Temperatur von etwa 500 °C mit Thermoelementen bestückt sind. Dieses Zeitintervall ist ausreichend, um anhand der gemessenen Temperaturen das Grundmodell an die spezifische Dynamik der Wärmeübertragung eines Anodenschachtes anzupassen.
Nach der Identifikation bei niedriger Temperatur können die Anoden-Thermoelemente entfernt werden. Die weiteren Anodentemperaturen werden anschließend aus einer Modellrechnung gewonnen.

Wenn diese Werte vorliegen, kann für jeden Anodenschacht ein Brennindex und/oder der Abweichungsindex berechnet werden. Bei Vorliegen des dynamischen adaptiven Modells für den Wärmeübergang an der Anode kann der Sollverlauf der Feuerschachttemperatur derart modifiziert werden, daß am Ende des Brennprozeßes der optimale Brennindex erzielt wird.

Da sich Feuer- und Anodenschächte abwechseln, liegt jeder Anodenschacht zwischen zwei Feuerschächten, wird also von zwei Seiten erhitzt. Ebenso versorgt jeder Feuerschacht auch zwei Anodenschächte. Daher muß durch eine iterative Optimierung diejenige Temperatur für jeden Feuerschacht gefunden werden, die die niedrigste Maximaltemperatur gewährleistet.
Da die beiden äußeren Feuerschächte nur je einen Anodenschacht versorgen, ist das Optimierungsproblem lösbar.

## Patentansprüche

1. Verfahren zur Prozeßführung eines Anodenbrennofens, aus dem ein einstellbarer Rauchgasstrom in mindestens eine Brennkammer geführt wird,
**gekennzeichnet durch** die Verfahrensschritte
- Messen der Rauchgastemperatur in jeder Brennkammer als IST-Temperatur,
- Erfassen des Sauerstoffgehaltes oder der Kohlenwasserstoffe,
- Einstellen der Leistung der Brenner in Abhängigkeit von der Feuerschachttemperatur und/ oder dem verfügbaren Sauerstoffangebot im Feuerschacht,
- Vergleichen der IST-Temperatur in der Brennkammer mit einer vorgegebenen Solltemperatur,
- Ermitteln eines Zeitintegrals der Temperaturabweichung und
- Regeln der IST-Temperatur im Verlauf der Prozeßführung in Abhängigkeit von dem ermittelten Zeitintegral derart, daß dieses am Ende der Prozeßführung auf Null zurückgeführt wird.

2. Verfahren nach Anspruch 1,
**dadurch gekennzeichnet, daß**
- vor Beginn der Ausgasung von flüchtigen Bestandteilen der Volumenstrom des Rauchgases derart angehoben wird, daß eine genügend hohe IST-Temperatur zur Zündung der Schwelgase und ausreichend Sauerstoff in der Brennkammer vorhanden ist.

3. Verfahren nach Anspruch 1,
**dadurch gekennzeichnet, daß**
- bei zuwenig Sauerstoff in der Brennkammer die Leistung der Brenner durch eine Reduzierung der Brennstoffzufuhr auf einen einstellbaren feuerungstechnischen Mindestwirkungsgrad reduziert wird und
- im weiteren Verlauf der Prozeßführung die Leistung des Brenners in Abhängigkeit von der vorhandenen Sauerstoffmenge derart erhöht wird, daß der Temperaturverlust während der sauerstoffarmen Phase ausgeglichen wird.

4. Verfahren nach Anspruch 1,
**dadurch gekennzeichnet, daß**
zur Erfassung des freien Sauerstoffgehaltes im Feuerschacht die Summe der Brennerleistungen und der flüchtigen Bestandteile im Verhältnis zum Rauchgasvolumen gebildet wird.

5. Verfahren nach Anspruch 1,
**dadurch gekennzeichnet, daß**
zur Abschätzung der flüchtigen Bestandteile der Temperaturgradient in der Ausgaszone bestimmt wird.

6. Verfahren nach Anspruch 1,
**dadurch gekennzeichnet, daß**
die vom Brenner erzeugte IST-Temperatur in einer ersten Phase der Sintertemperatur angehoben und in einer zweiten Phase unterhalb der Solltemperatur derart abgesenkt wird, daß über den Zeitraum der Prozeßführung der Abweichungsindex auf null reduziert wird.

7. Verfahren zur Prozeßführung eines Anodenbrennofens,
**gekennzeichnet durch** die Verfahrensschritte,
- Ermitteln eines Brennindexes an jeder Anode mittels Temperaturfühler im Anodenschacht zur Berechnung eines Temperatur-Zeitintegrals während der Sinterung und / oder
- Ermitteln eines Abweichungsintegrales von einem vorgegebenen Temperaturverlauf der Anode.

8. Verfahren nach Anspruch 7,
**dadurch gekennzeichnet, daß**
mittels der gemessenen Werte ein dynamisches adaptives Prozeßmodell des Temperatur-Zeit-Verhaltens während der ersten Aufheizphase im Anodenschacht erstellt wird, das während der Prozeßführung als Bezugsgröße zur tatsächlichen. Anodenverlaufstemperatur einsetzbar ist, ohne Verwendung von Temperaturfühlern an der Anode und/ oder im Anodenschacht.

9. Verfahren nach einem der Ansprüche 7 oder 8,
**dadurch gekennzeichnet, daß**
der Solltemperaturverlauf im Feuerschacht derart modifiziert ist, daß am Ende der Prozeßführung ein vorgegebener Brennindex erzielt wird.

10. Verfahren nach Anspruch 9,
**dadurch gekennzeichnet, daß**
mittels des adaptiven Prozeßmodells in den Brennkammern eine niedrige Maximaltemperatur erreicht wird.

11. Verfahren nach einem oder mehreren der vorgenannten Ansprüche,
**dadurch gekennzeichnet, daß**
die vorgenannten Verfahrensschritte beliebig kombinierbar sind.

12. Verfahren nach einem der vorgenannten Ansprüche,
**dadurch gekennzeichnet, daß**
die einzelnen Temperaturkorrekturen der Sollwertverläufe derart optimiert werden, daß eine möglichst niedrige Maximaltemperatur aller Feuerschächte erreicht wird.

## Claims

1. A method for running a process in an anode firing furnace from which an adjustable flue gas flow is transferred into at least one combustion chamber,
**characterised by** the following process steps:
- Measuring the flue gas temperature in each combustion chamber as the ACTUAL temperature,
- recording the oxygen content or the hydrocarbons,
- setting the power of the burner according to the flame duct temperature and/or the available oxygen in the flame duct,
- comparing the ACTUAL temperature in the combustion chamber with a specified setpoint temperature,
- ascertaining a time integral of the temperature deviation and
- regulating the ACTUAL temperature in the course of process running according to the ascertained time integral in such a way that the integral is reduced to zero by the end of the process running.

2. The method in accordance with Claim 1,
**characterised in that**,
- before the start of out-gassing of the volatile components, the volumetric flow of the flue gas is increased so that the ACTUAL temperature is sufficient to ignite the low temperature carbonisation gases and so there is sufficient oxygen in the combustion chamber.

3. The method in accordance with Claim 1,
**characterised in that**,
- if there is insufficient oxygen in the combustion chamber, the power of the burner is reduced to an adjustable minimum effectiveness level depending on the firing technique by means of reducing the fuel supply, and
- during the further running of the process, the power of the burner is increased in line with the available quantity of oxygen in order to compensate for the temperature loss during the phase with a low oxygen level.

4. The method in accordance with Claim 1,
**characterised in that**,
in order to detect the free oxygen content in the flame duct, the total of burner power ratings and of the volatile components is calculated in proportion to the flue gas volume.

5. The method in accordance with Claim 1,
**characterised in that**,
the temperature gradient in the out-gassing zone is calculated in order to estimate the volatile components.

6. The method in accordance with Claim 1,
**characterised in that**,
the ACTUAL temperature generated by the burner is raised in a first phase to the sinterising temperature while in a second phase below the setpoint temperature, the ACTUAL temperature is reduced so that the deviation index is reduced to zero over the whole period of the process running.

7. The method for running a process in an anode firing furnace,
**characterised by** the following process steps:
- Ascertaining a combustion index on each anode by means of a temperature probe in the anode duct for calculating a temperature/time integral during sinterising and/or
- ascertaining a deviation integral from a specified temperature sequence of the anode.

8. The method in accordance with Claim 7,
**characterised in that**,
the measured values are used for preparing a dynamic, adaptive process model of the temperature/time behaviour during the first heating-up phase in the anode duct which can be used during the process running as a reference parameter in relation to the actual anode sequence temperature without the use of temperature probes in on the anode and/or in the anode duct.

9. The method in accordance with Claim 7 or 8,
**characterised in that**,
the setpoint temperature sequence in the flame duct is modified so that a specified combustion index is achieved at the end of the process running.

10. The method in accordance with Claim 9,
**characterised in that**,
a low maximum temperature is achieved in the combustion chambers by means of the adaptive process model.

11. The method in accordance with one or more of the aforementioned Claims,
**characterised in that**,
the aforementioned process steps can be combined however required.

12. The method in accordance with one or more of the aforementioned Claims,
**characterised in that**,
the individual temperature corrections of the setpoint sequences are optimised in such a way that the maximum temperature of all flame ducts is as low as possible.

## Revendications

1. Méthode pour exécuter un procédé dans un four pour la cuisson d'anodes, provenant duquel un flux réglable de gaz brûlés est amené vers au moins une chambre de combustion,
**caractérisée par** les phases de procédé suivantes:
- Mesure de la température des gaz fumés en tant que température effective dans chaque chambre de combustion,
- Saisie de la teneur en oxygène ou des hydrocarbures,.
- Réglage de la puissance des brûleurs en dépendance de la température dans la cheminée de combustion et/ou de la quantité d'oxygène disponible dans la cheminée de combustion,
- Comparaison de la température effective dans la chambre de combustion avec la température nominale réglée,
- Détermination d'une intégrale de temps pour la déviation de température et
- Réglage de la température effective durant l'exécution du procédé en dépendance de l'intégrale de temps, de sorte qu'à la fin du procédé, elle soit ramenée à zéro.

2. Méthode d'après la revendication 1,
**caractérisée en ce que**,
- avant de commencer le dégagement des gaz des composants volatils, le flux volumique des gaz brûlés est augmenté de sorte qu'il soit atteint un niveau de température effective assez élevé pour allumer les gaz de distillation, et une quantité d'oxygène suffisante dans la chambre de combustion.

3. Méthode d'après la revendication 1,
**caractérisée en ce que**,
- en cas de manque d'oxygène dans la chambre de combustion, la puissance des brûleurs est réduite par diminution de l'apport de carburant à tel point qu'il soit atteint un rendement minimal réglable de la combustion et
- durant l'exécution ultérieure du procédé, la puissance du brûleur est augmentée en dépendance de la quantité d'oxygène disponible, de sorte qu'il soit compensé la perte de température durant la phase de manque d'oxygène.

4. Méthode d'après la revendication 1,
**caractérisée en ce que**
- pour déterminer la quantité d'oxygène disponible dans la cheminée de combustion, il est formé la somme des puissances des brûleurs et des composants volatils par rapport au volume des gaz fumés.

5. Méthode d'après la revendication 1,
**caractérisée en ce que**
- pour estimer les composants volatils, il est déterminé le gradient thermique dans la zone de dégagement des gaz.

6. Méthode d'après la revendication 1,
**caractérisée en ce que**
- la température effective produite par le brûleur est augmentée à la première phase de la température de frittage, et que dans une deuxième phase, elle est ramenée en dessous de la température nominale, de sorte qu'au cours de l'exécution du procédé, l'indice de déviation soit réduit à zéro.

7. Méthode pour exécuter un procédé dans un four pour la cuisson d'anodes,
**caractérisée par** les phases de procédé suivantes:
- Détermination d'un indice de combustion sur chaque anode au moyen d'un palpeur de température dans la cheminée d'anode, destinée à calculer l'intégrale de température/temps durant le frittage et/ou
- Détermination d'une intégrale de déviation d'une courbe de température donnée de l'anode.

8. Méthode d'après la revendication 7,
**caractérisée en ce que**
- moyennant les valeurs mesurées, il est établi un modèle de procédé dynamique et adaptatif du comportement température/temps durant la première phase de réchauffement dans la cheminée d'anode qui, lors de l'exécution du procédé, se laisse utiliser en tant que paramètre de référence pour l'évolution effective de la température de l'anode, sans qu'il soit utilisé des palpeurs de température sur l'anode et/ou dans la cheminée d'anodes.

9. Méthode d'après la revendication 7 ou 8,
**caractérisée en ce que**
- la courbe de température nominale dans la cheminée de combustion est modifiée de sorte qu'à la fin du procédé, il soit atteint un indice de combustion réglé à l'avance.

10. Méthode d'après la revendication 9,
**caractérisée en ce que**
- moyennant le modèle de procédé adaptatif, il est réalisée une basse température maximale dans les chambres de combustion.

11. Méthode d'après une ou plusieurs des revendications précédentes,
**caractérisée en ce que**
- les phases de procédé mentionnées se laissent combiner de manière quelconque.

12. Méthode d'après une des revendications précédentes,
**caractérisée en ce que**
- les diverses corrections de température des courbes nominales sont optimisées à tel point qu'il soit atteint une température maximale aussi basse que possible dans toutes les cheminées de combustion.
